# EUROPEAN PATENT SPECIFICATION

(11) **EP 0 831 612 B1**
(45) Date of publication and mention of the grant of the patent: **17.06.2009**
(21) Application number: 97907285.7
(22) Date of filing: 12.03.1997
(51) Int. Cl.: H04J 3/00, H04B 7/24, H04B 7/26

(54) **MOBILE COMMUNICATION SYSTEM**
MOBILES NACHRICHTENÜBERTRAGUNGSSYSTEM
SYSTEME DE COMMUNICATION MOBILE

(30) Priority: 15.03.1996 JP 5946996
(43) Date of publication of application: 25.03.1998
(73) Proprietor: NTT MOBILE COMMUNICATIONS NETWORK INC., Minato-ku Tokyo 105 (JP)
(72) Inventor: OKAJIMA, Ichiro, Isogo-ku, Yokohama-shi, Kanagawa 235 (JP); MAEBARA, Akihiro, Isogo-ku, Yokohama-shi, Kanagawa 235 (JP); MURASE, Atsushi, Yokosuka-shi, Kanagawa 239 (JP); KOBAYASHI, Katsumi, Yokohama-shi, Kanagawa 233 (JP); TAKAMI, Tadao, Yokosukashi, Kanagawa 238 (JP)
(74) Representative: Röss, Walter Josef Alfred
(86) International application number: PCT/JP1997/000777
(87) International publication number: WO 1997/034385

(56) References cited:
- EP-A- 0 522 631
- EP-A- 0 536 099
- EP-A- 0 629 095
- WO-A-95/12934
- JP-A- 1 007 742
- JP-A- 1 245 728
- JP-A- 5 114 883
- JP-A- 8 307 337
- US-A- 5 392 287

## Description

### Technical Field

The present invention relates to a mobile communication system which communicates between a base station and a plurality of mobile stations using the TDMA method, and particularly, to a mobile communication system which is able to reduce the electrical power consumed by a mobile station which employs the TDMA method to receive data signals.

### Background Art

In the conventional technology, when a data signal for a mobile station is generated, a base station that uses the TDMA method for communication searches for a vacant slot in a TDMA channel, and transmits the data signal using the vacant slot immediately after generation of the data signal. Meanwhile, a mobile station monitors all slots, and receives the data signal in the slot if that data signal is addressed to that station.

In this case, however, in order to determine whether a data signal is addressed to itself or not, the mobile station must demodulate a data signal in every received slot and read a mobile identifier which is contained in each slot. Electrical power is therefore consumed by the mobile station in carrying out the above mentioned procedures. At the same time, it is necessary to extend the signal waiting time of the mobile station, and to reduce the size of the mobile station's battery. In order to meet these requirements, it is thus desirable to reduce as much as possible the electrical power used in the data signal detection.

US-A-5,392,287 discloses a system for reducing receiver power consumption in communication system having a transmitter and one or more receivers which schedules periodic messages in "slots". Each receiver is assigned a slot during which it monitors the transmissions. The transmitter transmits messages to the receiver only during the assigned slots. The receiver is in an "active state" during its assigned slot. It may remain in the active state after its assigned slot if the message requires the receiver to perform additional actions. During the "inactive state", which is the time period between successive occurrences of its assigned slot, the receiver may perform any action not requiring coordination with the transmitter. It may conserve power during this time by removing power from one or more components such as those used for monitoring the transmissions. At a time during the inactive state shortly before the assigned slot, the receiver applies power to these components and performs initializations. Such initializations may include requiring a pilot channel signal to which the receiver may synchronize itself if its timing signals have drifted out of synchronization with those of the transmitter during the preceding inactive state.

EP 0 629 095 A2 discloses a cellular mobile radio system arranged to operate in accordance with a packet reservation multiple access protocol, wherein at least some frames on a down-link (base station to mobile) include a slot, called a fast paging slot (FP slot) reserved for information which indicates to a mobile the information slots in which to listen for the reception of information, and wherein at least some frames on an uplink (mobile to base station) are arranged to include an FP acknowledgement signal by means of which a mobile acknowledges receipt of FP information. The FP slot includes data identifying the address of a mobile being paged, together with data identifying the slots in which information for that mobile will subsequently be transmitted consequently upon receipt by the base station of an FP acknowledgement signal.

An information transmission system as disclosed in EP 0 522 631 A2 comprises a primary station and a number of secondary stations, information being transmitted from the primary station during traffic time periods which are interspersed in time with control time slots. The control time slots contain control data (CD) which contains a number of identifying indications (CMD1, CMD2, CMD3, CMD4) which each may include an address relating to a secondary station for which succeeding traffic information is intended. The identifying indications may be configured in a number of different ways, for example (E1), it may contain an address (A) and a traffic position identifier (XN). It may also contain, for example (E2), a channel identifier (CH). The information in the control slots allows secondary stations, which may be powered down for substantial periods of time, to prepare for reception of succeeding information if an address identifying that secondary station is included in the control data (CD).

EP 0 536 099 A1 provides a method for avoiding an unnecessary high energy consumption of mobile stations which are included in a digital time-multiplex mobile telephony system. In an idle mode, each of the mobile stations normally listens on only each Nth time slot of a channel which, among other things, is intended for the transmission of paging messages, ,e.g. the CCCH-channel in GSM. In order to reduce the time of establishing a call connection, the system includes the possibility of applying a so-called extended page mode, wherein a time slot, e.g. time slot N, may contain information instructing the mobile stations to listen also on an additional time slot, e.g. time slot N+2. According to this prior art, the extended page mode can be applied significantly with regard to time gained and increased energy consumption, in the following manner: There is decided a percentage which corresponds to a maximum value for the percentage of paging messages that may be transmitted in the extended page mode. A decision is then reached as to whether an extended page mode is used, depending, in each separate case, whether or not there is a need for an extended page mode, whether or not the additional time slot has a free space, and whether or not the percentage decided has been exceeded.

### Disclosure of Invention

The present invention was developed in consideration of the above circumstances, and has as its objective the provision of a mobile communication system wherein it is possible to reduce the electrical power consumed by the mobile station during the signal reception waiting period, by observing only the starting slot on a TDMA radio channel.

The above objective is achieved by the advantageous measures set forth in the independent claims. Further embodiments and developments of the invention constitute the subject-matter of the subclaims.
(1) In a mobile communication system that transmits data signal from a base station to a plurality of mobile stations by using TDMA radio channel that consists of a plurality of slots,
said base station may consist of
a generating means for generating a head slot having a mobile station identifier which indicates a mobile station for transmission and continuous slots having a least part of said data signal,
a transmission means for transmitting said head slot with a starting slot which locates at predetermined position of each of said a plurality of mobile stations, on said TDMA radio channel, and
a transmission means for transmitting said continuous slot with a slot which continues said starting slot, and
each of said mobile stations may consist of
an observation means for observing said starting slot,
a judging means for judging said mobile station identifier when said starting slot is a head slot, and
a receiving means for receiving said continuous slot when said mobile station identifier indicates oneself.

Therefore, a mobile station monitors only a starting slot, so that it is possible to reduce the electrical power of the battery consumed by the mobile station to be shorten the operating time of a receiving apparatus, in comparison with a case where the mobile station monitors all slots.
(2) Said base station may further consist of a transmission means for transmitting vacant slot which does not contain said data signal when there is no said data signal, and
said mobile station may further consist of a stopping means for stopping a receiving operation until next of said starting slot when said starting slot is said vacant slot or said continuous slot.

Therefore, when the received slot is a vacant slot or when received slot is a signal slot addressed to another mobile station, the mobile station stops reception of signals, so that it is possible to shorten a delay time of the signal by transmitting continuously a plurality of signals.
(3) Said base station may further consist of a generating means for generating synchronous words of various kinds which are for synchronizing to said slots, and
a transmission means for transmitting a synchronous word selected from said synchronous words of various kinds to be contained in said slots, on the basis of the information which indicates whether the monitored slot is said starting slot or not, and said mobile stations may further consist of a judging means for judging whether said slot is said starting slot or not, on the basis of the kind of said synchronous word.

Therefore, according to the present invention, the mobile station can judge the position of the starting slot at the same time as synchronizing of slots.
(4) Said base station may set a common starting slot at a predetermined position on said TDMA radio channel, and may further consist of a generating means for a continuous slot having mobile station identifiers which indicate said plurality of mobile stations and at least a part of said data signal when said base station transmits common data signals for a plurality of mobile stations,
a transmission means for transmitting said starting slot with said common starting slot, and
a transmission means for transmitting said continuous slot with said slots which follows said common starting slot, and
said mobile station may further consist of a monitoring means for monitoring said common starting slot, in addition to said starting slot which is determined for every mobile station,
a recognition means for recognizing said mobile station identifier when said common starting slot is said starting slot, and
a receiving means for receiving said continuous slot if there is a mobile station identifier which indicates itself among said mobile station identifiers.

Therefore, it is possible to reduce the electrical power of the battery consumed by the mobile station, and to ensure signal transmission addressed to each mobile station by arranging to disperse a slot of each mobile station. Furthermore, it is possible to shorten a delay time wherein a common signal is transmitted to a plurality of mobile stations by setting a common starting slot that a plurality of mobile stations begin reception commonly, in comparison with the case where an individual slot is used each mobile station. In addition, it is possible to improve the using efficiency of the TDMA radio channel by that over-lapped signal does not transmit.
(5) Said base station may further consist of a transmission means for transmitting an informing signal indicating a position of said starting slot for each of mobile stations, and
said mobile station may further consist of a starting means for starting a receiving operation from said starting slot which is indicated by said information signal.

Therefore, it is possible to inform immediately presence of a data signal to the mobile station, in comparison with the case where data signals are transmitted successively to one or more mobile stations, by informing presence of a data signal to one or more mobile stations with the informing signal.
(6) Said mobile station may further consist of a transmission means for transmitting a receiving mode which indicates whether it monitors all slots or it monitors only a starting slot, and
an observing means for observing said slot by the receiving mode which is transmitted by said transmission means, and
said base station may further consist of a receiving means for receiving said receiving mode,
a transmission means for transmitting said data signal to a mobile station which transmits said receiving mode from a slot immediately after that said data signal is generated, when said receiving mode indicates to monitor said all slots, and
a transmission means for transmitting said data signal for a mobile station which transmitted said receiving mode from said starting slot when said receiving mode indicates that said mobile station monitors only said starting slot.

Therefore, it is possible to switch a transmission mode by request from the mobile station in the base station. Furthermore, it is possible to immediately transmit a data signal by switching a succession transmission mode, in the case where the traffic is large or the permitted transmission delay is small. In addition, it is possible to change a transmission procedure to the intermittent transmission mode at the start of communication or during communication, according to the limit of the battery consumption in the mobile station.
(7) Said base station may further consist of a transmission means for transmitting a slot designating signal which contains information indicating a position of said starting slot, and
said mobile station may further consist of a receiving means for receiving said slot designating signal, and
a judgment means for judging a position of said starting slot based on said slot designating signal.

Therefore, it is possible to determine the arrangement of the starting slot and the common starting slot, according to the conditions.

### Brief Description of Drawings

Fig. 1 is a block diagram showing the structure of a communication system of a first embodiment in this invention;
Fig. 2 is a conceptual diagram showing the structure of data signal 32;
Fig. 3 is a conceptual diagram showing the structure of TDMA radio channel 30;
Fig. 4 is a conceptual diagram showing the structure of a vacant slot;
Fig. 5 is a conceptual diagram showing the structure of a signal slot used for transmitting a data signal;
Fig. 6 is a conceptual diagram showing a transmission method of the vacant slot and the signal slot in the TDMA radio channel;
Fig. 7 is a conceptual diagram showing the procedures of a receiving apparatus
   wherein there is no signal to be transmitted from a base station to mobile stations;
Fig. 8 is a conceptual diagram showing the procedures of a receiving apparatus
   wherein the starting slots are arranged periodically on TDMA radio channel;
Fig. 9 is a conceptual diagram showing the procedures of a receiving apparatus
   wherein there is a signal to be transmitted from a base station to mobile stations;
Fig. 10 is a conceptual diagram showing the method for determining the position of the starting slot at the mobile stations;
Fig. 11 is a conceptual diagram showing the procedures of the mobile stations
   wherein there are two or more signals to be transmitted from a base station to a mobile station;
Fig. 12 is a conceptual diagram showing an example of the procedures of a base station and a plurality of mobile stations;
Fig. 13 is a conceptual diagram showing the procedures of a base station and a mobile station wherein the base station transmits a common signal to a plurality of mobile stations;
Fig. 14 is a conceptual diagram showing the structure of a transmission mode signal;
Fig. 15 is a conceptual diagram showing the structure of an informing signal;
Fig. 16 is a conceptual diagram showing the structure of a data signal;
Fig. 17 is a conceptual diagram showing the procedures of mobile stations in the case where the arrangement of the starting slots is informed by means of an informing signal; and
Fig. 18 is a conceptual diagram showing the structure of a slot designation signal, which designates the arrangement of starting slots or a common starting slot.

### Best Mode for Carrying Out the Invention

The best mode for carrying out the present invention will now be described with reference to the drawings.

### (FIRST EMBODIMENT)

### A HARDWARE STRUCTURE OF FIRST EMBODIMENT

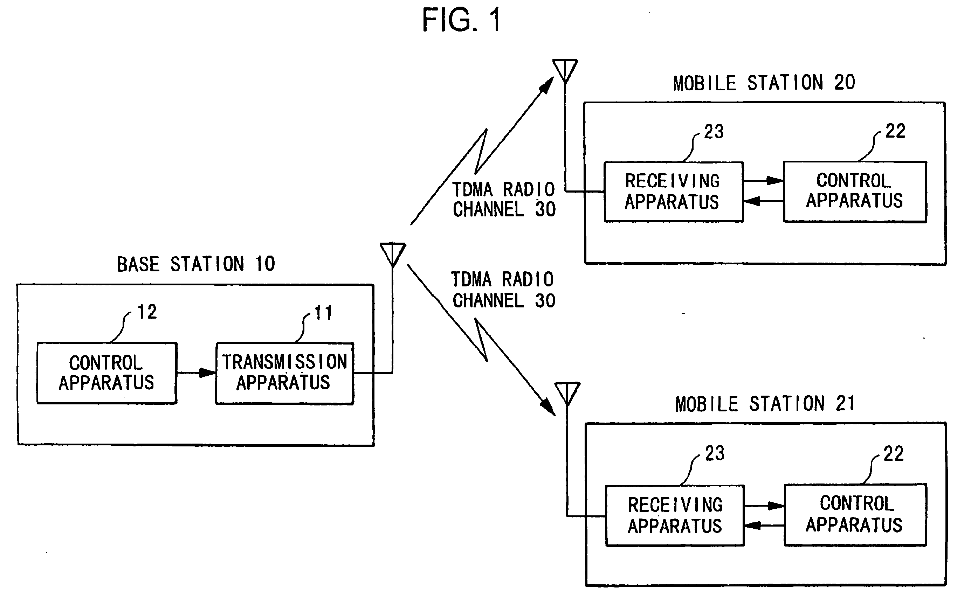

Fig. 1 is a block diagram showing the structure of the communication system of a first embodiment in this invention. In Fig. 1, base station 10 and one or more mobile stations 20, 21 are set up in a mobile communication system. Base station 10 and mobile stations 20, 21 communicate through a TDMA radio channel. Base station 10 consists of transmission apparatus 11, which transmits TDMA radio channel 30, and control apparatus 12, which controls the operation of transmission apparatus 11 by generating a signal. Mobile station 20 consists of receiving apparatus 23, which receives TDMA radio channel 30, and control apparatus 22, which controls the operation of receiving apparatus 23 by analyzing the signal.

### B. DATA STRUCTURE IN FIRST EMBODIMENT

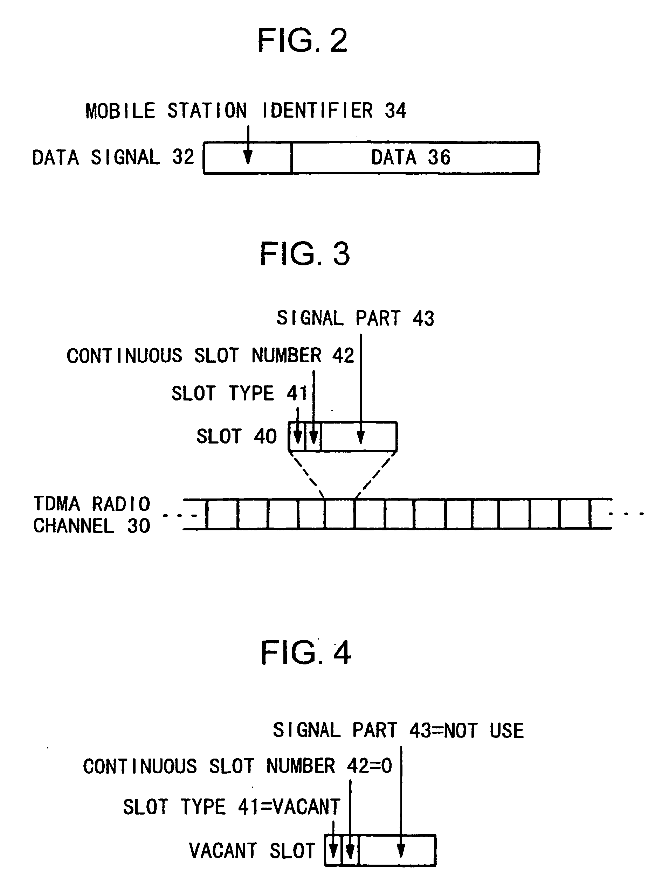

An explanation will be made of various data structures which are used in the first embodiment. Fig. 2 is a conceptual diagram showing the structure of data signal 32 which is transmitted from base station 10 to mobile stations 20, 21. Data signal 32 consists of mobile station identifier 34, which indicates an address, and data 36, which is transmitted to mobile stations 20, 21.

Fig. 3 is a conceptual diagram showing the structure of TDMA radio channel 30. TDMA radio channel 30 consists of continuous slots 40. A slot 40 consists of slot type 41 which indicates the type of slot, continuous slot number 42 which indicates the number of slots which are continuous to form data signal 32, and signal part 43. Data signal 32 is inserted into one or more signal parts 43.

Fig. 4 is a conceptual diagram showing the structure of a vacant slot 40 where a data signal is not contained. Slot type 41 indicates that the slot is a vacant slot, and continuous slot number 42 indicates "0". Signal part 43 is not used.

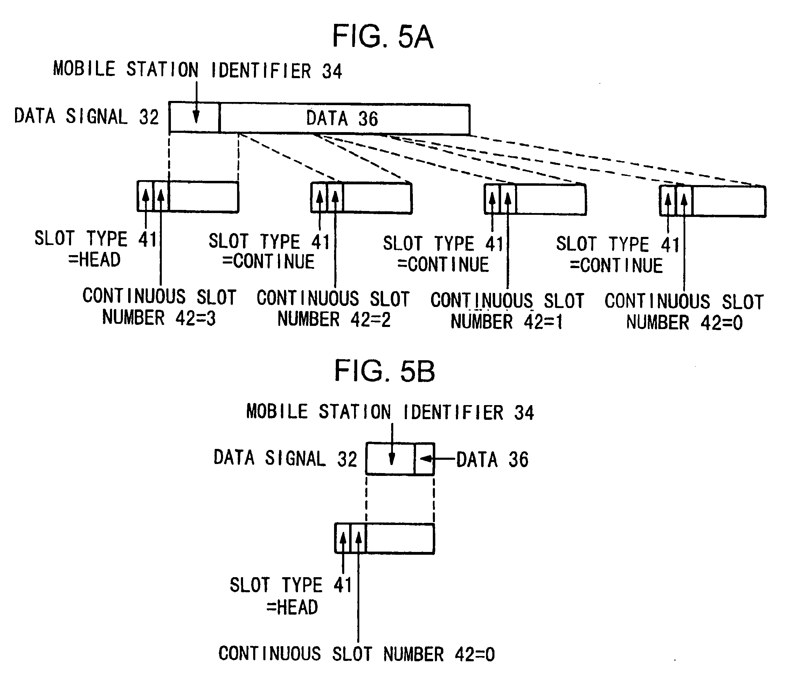

Next, Fig. 5(A) is a conceptual diagram showing the structure of a signal slot
wherein data signal 32 is transmitted by using a plurality of slots. In a head slot, slot type 41 indicates that the slot is a head slot. Furthermore, the number of slots which continue after the head slot, i.e. "3", is inserted into continuous slot number 42. The head portion of data signal 32 is set in signal part 43. Next, slot type 41 of the continuous slots indicates that the slots are continuous slots. The remaining portion of data signal 32 is set in signal part 43 of the continuous slots.

However, it is possible to transmit data signal 32 with one slot. In this case, only a single slot as shown in Fig. 5(B) is transmitted. Slot type 41 of this slot indicates that the slot is the head slot, and the number of continuous slots 42 is "0".

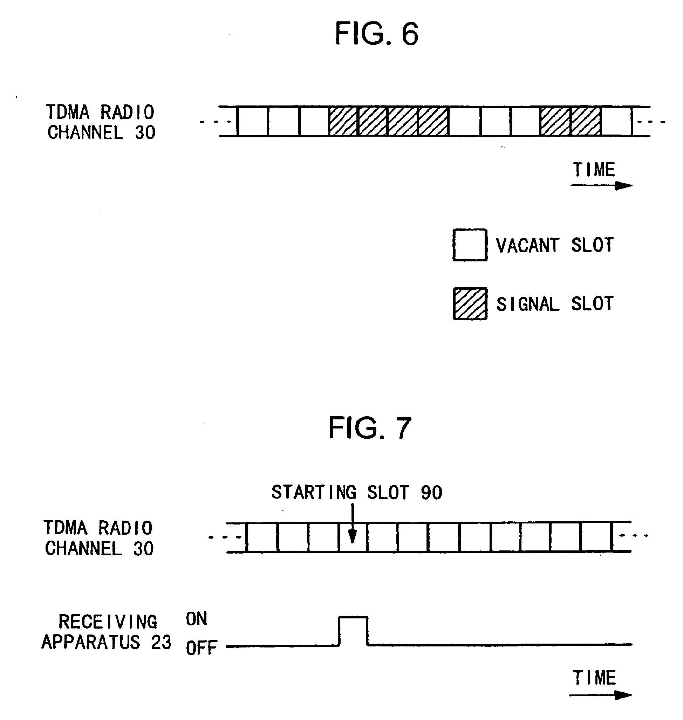

Next, Fig. 6 is a conceptual diagram showing the state wherein a vacant slot having no data signal 32 and a signal slot having a signal are transmitted through the TDMA radio channel. In Fig. 6, the hatched slots are signal slots, while the slots without hatching are vacant slots. When data signal 32 is generated, a signal slot or a plurality of signal slots corresponding to data signal 32 is transmitted continuously. The vacant slots are transmitted during the period when signal slots are not transmitted.

### C. OPERATION OF FIRST EMBODIMENT

### C.1. Monitoring by mobile station for data addressed to itself

Fig. 7 is a conceptual diagram showing the procedures of base station 10 in the case where there is no signal to be transmitted. In this case, control apparatus 12 causes transmission apparatus 11 to transmit vacant slots in all slots of TDMA radio channel 30. The slot herein is assumed to be generated at a fixed timing in TDMA radio channel 30. This slot is called the "starting slot". When control apparatus 21 of mobile stations 20, 21 receives starting slot 90, control apparatus 21 outputs instructions to receiving apparatus 23 to start receiving.

Receiving apparatus 23 receives starting slot 90 when it receives the instructions, and supplies the starting slot 90 to control apparatus 22. Control apparatus 22 detects whether supplied starting slot 90 is a vacant slot or not. If starting slot 90 is a vacant slot, control apparatus 22 judges that a signal addressed to itself has not occurred, and instructs receiving apparatus 23 to stop receiving the slots.

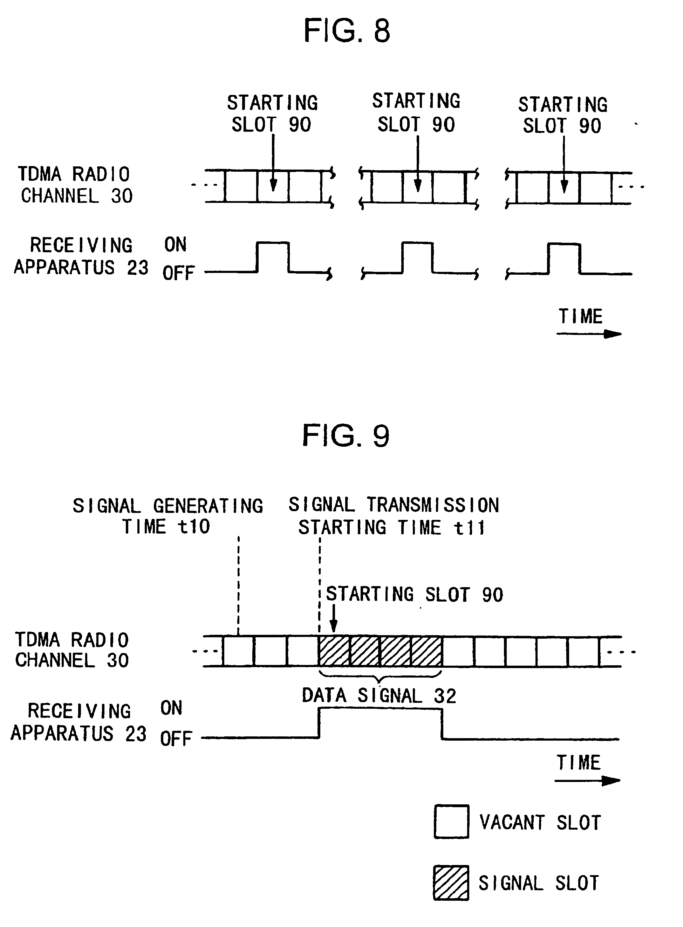

Starting slot 90 is arranged periodically on TDMA radio channel 30 as shown in Fig. 8. Therefore, mobile stations 20, 21 may monitor only starting slot 90.

### C.2. Data transmission (single) for mobile station

An explanation will now be made of the operation when various data are transmitted to mobile stations 20, 21, beginning with the case where the data signal to be transmitted is a singular number.

As shown in Fig. 9, base station 10 transmits a signal generated prior to the occurrence of a given starting slot 90 as the starting point for starting slot 90. For example, when data signal 32 to be transmitted to mobile station 20 occurs at time t10, control apparatus 12 of base station 10 holds the transmission of data signal 32 until transmission starting time t11 of starting slot 90. Next, control apparatus 12 causes transmission apparatus 11 to transmit vacant slots until the slot immediately preceding starting slot 90, and to start the transmission of data signal 32 from starting slot 90. When transmission apparatus 11 completes the transmission of data signal 32, control apparatus 12 causes transmission apparatus 11 to transmit vacant slots.

Control apparatuses 22, 22 of mobile stations 20, 21 instruct receiving apparatuses 23, 23 to start signal reception at starting slot 90. Consequently, receiving apparatuses 23, 23 receive the information in starting slot 90, and supply the information to control apparatuses 22, 22. Control apparatuses 22, 22 determine whether to continue receiving the signals or not, based on the slot received from receiving apparatuses 23, 23. That is, control apparatuses 22, 22 continue signal reception if the received slot is the starting slot of data signal 32 addressed to that mobile station. After that, control apparatuses 22, 22 instruct receiving apparatuses 23, 23 to stop signal reception after completion of reception of the signal slot containing data signal 32. On the other hand, if starting slot 90 is a vacant slot or is a slot having a data signal for another station, then signal reception is terminated.

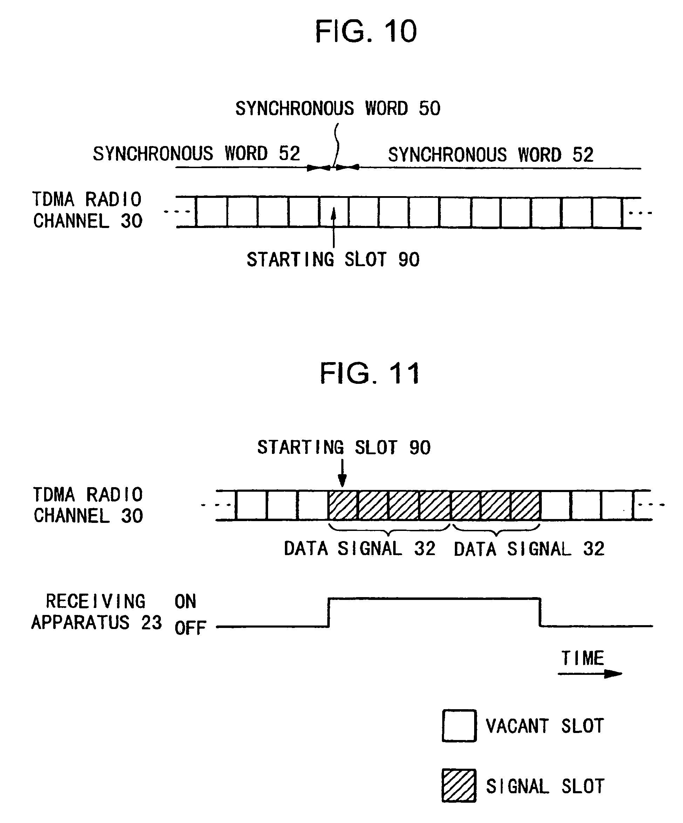

An explanation using Fig. 10 will now be made of the method by which mobile stations 20, 21 determine the position of starting slot 90 on TDMA radio channel 30. First, each slot contains a synchronous word so that mobile stations 20,21 can synchronize with the slots. When communication is started, mobile stations 20, 21 continuously receive the slots of TDMA radio channel 30, and synchronize with these slots. In this embodiment, two types of synchronous words 50,52 are employed. Base station 10 transmits synchronous word 50 with slot 90, and transmits synchronous word 52 with another slot. Mobile stations 20, 21 continuously receive slots at the start of communications, and determine that "the slot in which synchronous word 50 was received is starting slot 90". Consequently, mobile stations 20, 21 can synchronize with the slots, while simultaneously determining the position of starting slot 90.

In the above mentioned operation, the position of starting slot 90 may be determined dynamically based on the transmission delay of the forward signal required by mobile stations 20, 21 and the amount of stored energy consumed in the battery. For example, in the case where there is a low volume of signal traffic, and a large delay is permitted between the occurrence of a signal in base station 10 and the transmission of the signal to mobile stations 20, 21, then the interval of starting slot 90 may be larger. Conversely, when a large delay is not permitted, then the interval of starting slot 90 may be shorter.

In the above mentioned operation, mobile stations 20, 21 monitor only starting slot 90, so that the operating time of receiving apparatus 23 becomes shorter than it is in the case when all slots are monitored. Therefore, it is possible to reduce battery consumption in mobile stations 20, 21.

### C.3. Data transmission (plural) for mobile station

Next, an explanation will be made of the operation in the case where a plurality of data signals 32 are transmitted from base station 10 to mobile stations 20, 21. Fig. 11 is conceptual diagrams showing the state where two data signals 32 to be transmitted from base station 10 are present. In base station 10, when two data signals 32 occur, control apparatus 12 holds the transmission of data signal 32 until the transmission of starting slot 90 is started. Next, control apparatus 12 instructs transmission apparatus 11 to transmit the signal slots containing two data signals 32 from starting slot 90, and two data signals 32 are transmitted from transmission apparatus 11. When the transmission of the signal slots is complete, control apparatus 12 causes transmission apparatus 11 to transmit vacant slots.

Receiving apparatuses 23, 23 of mobile stations 20, 21 start reception of the signal from starting slot 90, and transmit the received signal to control apparatuses 22, 22. Next, control apparatuses 22, 22 determine whether to continue receiving or not based on the slot received from receiving apparatuses 23, 23. That is, if the mobile identifier 34 for that mobile station is included in signal part 43 of the starting slot, then control apparatuses 22, 22 instruct receiving apparatuses 23, 23 to receive the number of continuous slots which is indicated by continuous slot number 42. Receiving apparatuses 23, 23 receive the consecutive continuous slots according to the instructions. Furthermore, after reception of the consecutive continuous slots, receiving apparatuses 23, 23 receive another slot. If this slot contains a mobile identifier 34 that indicates that mobile station, then receiving apparatuses 23, 23 further receive the number of continuous slots which is indicated by continuous slot number 42.

On the other hand, if the received slot is a vacant slot or is for another mobile station, then control apparatuses 22, 22 instruct receiving apparatuses 23, 23 to stop signal reception. Therefore, as a result of the above-mentioned operation, it is possible to shorten the delay time of the signal by consecutively transmitting a plurality of signals.

### C.4. Volley informing

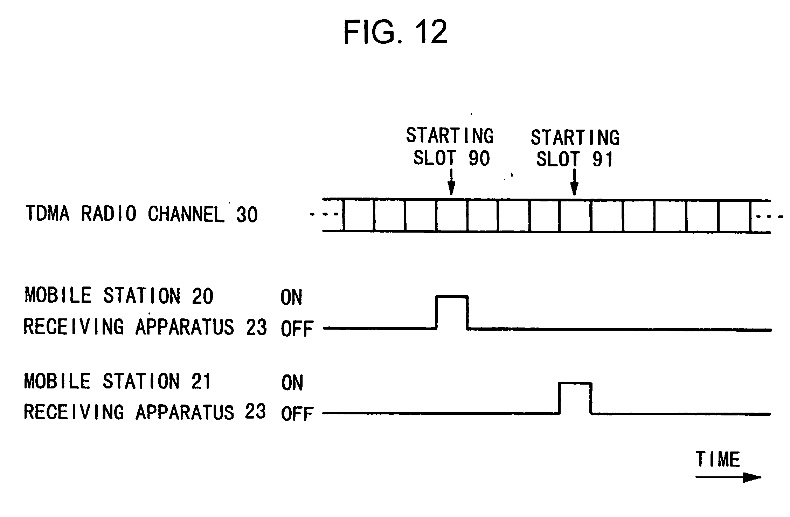

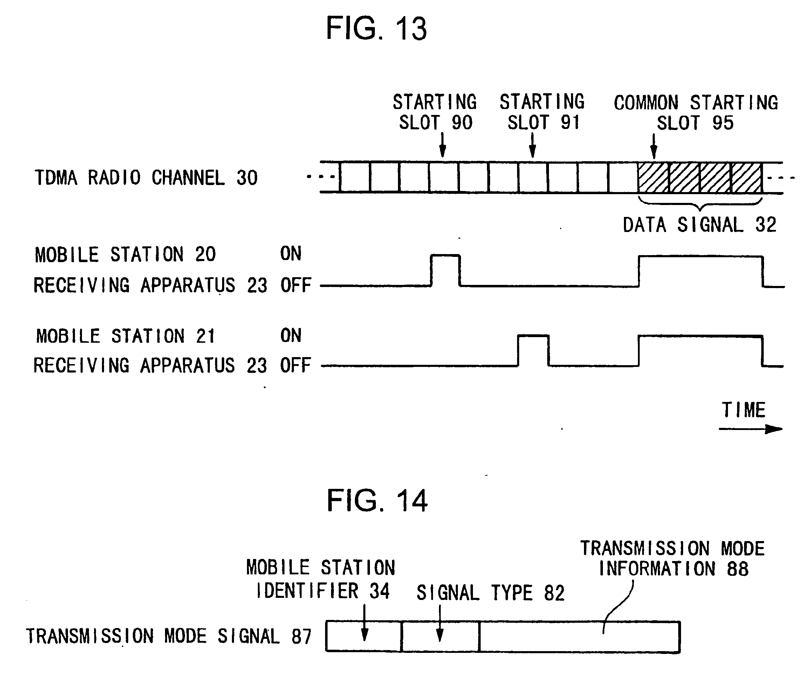

Next, an explanation will be made with reference to Figs. 12 and 13 of a volley informing operation in which a common signal is transmitted to a plurality of mobile stations. As shown Fig. 12, base station 10 transmits signals for mobile station 20 from starting slot 90, and transmits signals for mobile station 21 from starting slot 91. Starting slot 91 has the same data structure as starting slot 90. Mobile station 20 monitors starting slot 90, and mobile station 21 monitors starting slot 91.

As shown in Fig. 13, base station 10 transmits data signal 32 which will be transmitted to both mobile station 20 and mobile station 21, from common starting slot 95. Mobile station identifier 34 of data signal 32 indicates both mobile station 20 and mobile station 21. Note that here the position of common starting slot 95 on the TDMA radio channel is determined in advance. Mobile stations 20, 21 monitor common starting slot 95, in addition to starting slot 90 or 91. If common starting slot 95 contains a signal addressed to itself, then mobile stations 20, 21 stop reception after receiving the signal slots which follow common starting slot 95. On the other hand, if the received slot is a vacant slot or a signal slot for another mobile station, then mobile stations 20, 21 stop reception immediately.

As a result of the above described operation, it is possible to reduce the amount of stored energy consumed in the battery of the mobile station, while ensuring signal transmission for each mobile station, by arranging diffusely the slots for each mobile station. Furthermore, it is possible to shorten the delay time in the case where a common signal is transmitted to a plurality of mobile stations by providing common starting slot 95 which a plurality of mobile stations begin signal reception in common, as compared to the delay time in the case where an individual slot is used for each mobile station. In addition, it is possible to improve the utilization efficiency of the TDMA radio channel 30 because there is no over-lapped signal transmission.

### C.5. Mode switching

A conventional mobile station continuously monitors a TDMA radio channel. In the present invention, it is of course acceptable to mix a conventional mobile station and a mobile station which monitors only starting slot 90 based on this embodiment in the communication system. On the other hand, in the mobile station according to this embodiment, if the traffic volume is large, or if the permissible transmission delay is short, then it is optimal for the mobile station to be able to continuously monitor TDMA radio channel 30.

Thus, in this embodiment, in that case, it is possible to switch the operating mode of mobile stations 20, 21 based on the control of base station 10, and to change the transmission mode of base station 10. Furthermore, conversely, base station 10 may switch the transmission mode according to a request from mobile stations 20, 21.

Fig. 14 is a conceptual diagram showing the structure of transmission mode signal 87 which requests the switching of the transmission mode from mobile stations 20, 21 to base station 10. Transmission mode signal 87 consists of mobile station identifier 34, signal type 82 showing that the signal is the transmission mode signal, and transmission mode information 88 showing the transmission procedure of the signal. Transmission mode information 88 indicates a continuation transmission mode and an intermittent transmission mode, for example. In the continuous transmission mode, the transmission of data signals starts at an optional time. In the intermittent transmission mode, the transmission of data signals starts with starting slot 90 and common starting slot 95 only. Meanwhile, mobile stations 20, 21 transmit transmission mode signal 87 to base station 10 before a communication or during a communication. When base station 10 receives transmission mode signal 87, base station 10 transmits data signals according to the transmission procedure requested by mobile station 20 or 21.

By the above mentioned operation, in the case where the volume of traffic is large, or the permissible transmission delay is small, it is possible to carry out transmission at a high rate in the same way as the conventional technique, by switching to the continuous transmission mode. Furthermore, it is possible to change the transmission procedure to the intermittent transmission mode at the start of communication or during communication, according to the limit of the battery consumption in the mobile station. In addition, it is possible to change the interval of the starting slot based on transmission mode signal 87.

Furthermore, in the first embodiment, although base station 10 is requested by mobile stations 20, 21 to change of the transmission mode, it is also acceptable for base station 10 to switch the transmission mode of each mobile station 20, 21. In this case, base station 10 switches the transmission mode according to a list (table), which is stored therein in advance and has compatible transmission modes for each mobile station 20, 21. Each of mobile stations 20, 21 is given an intrinsic mobile identifier respectively, so that base station 10 may store the transmission mode of each mobile station, corresponding to the mobile identifier. The information in the list is set by some input means or other in advance.

### (SECOND EMBODIMENT)

### A. HARDWARE STRUCTURE AND DATA STRUCTURE OF SECOND EMBODIMENT

The hardware structure of the second embodiment is the same as that of the first embodiment, however, the data structure differs slightly, as described below.

That is, in this second embodiment, starting slot information 85 showing the position of starting slot 90 in each mobile station is transmitted from base station 10 to mobile stations 20, 21 by informing signal 80. Base station 10 transmits one or more data signal 86 to mobile stations 20, 21 after transmission of informing signal 80.

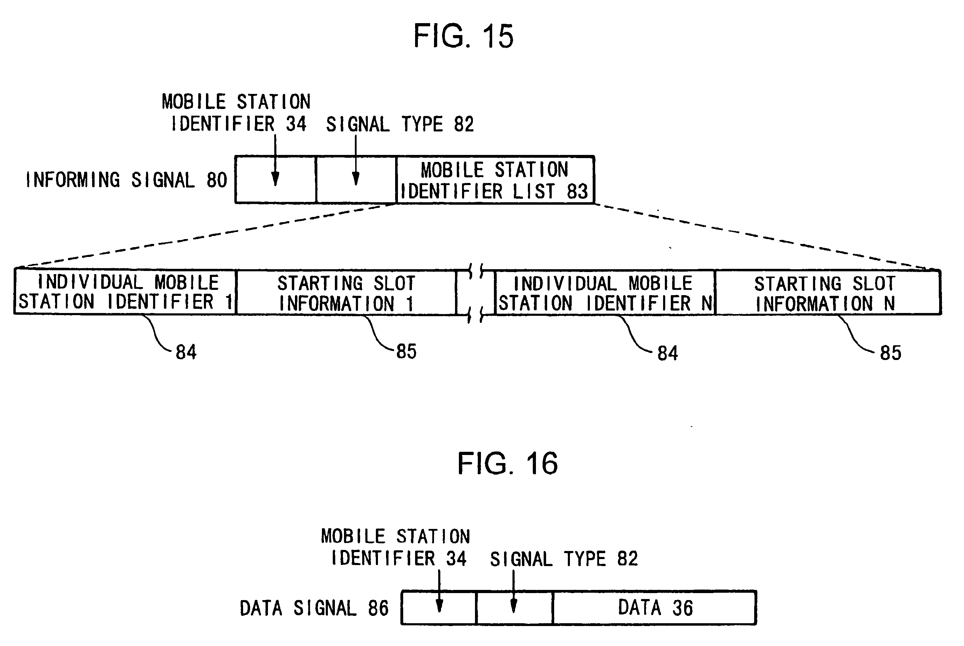

Fig. 15 is a conceptual diagram showing the structure of informing signal 80. Informing signal 80 consists of mobile station identifier 34 for identifying one or more mobile stations which are to receive the informing signal, signal type 82 which indicates that it is an informing signal, and mobile station identifier list 83. Mobile station identifier list 83 contains individual mobile station identifier 84 which indicates each address of one or more signals, and starting slot information 85 which indicates the position of the starting slot of data signal 86.

Fig. 16 is a conceptual diagram showing the structure of data signal 86. Data signal 86 consists of mobile station identifier 34 for identifying a mobile station, signal type 82 which indicates that it is a data signal, and data 36.

### B. OPERATION OF SECOND EMBODIMENT

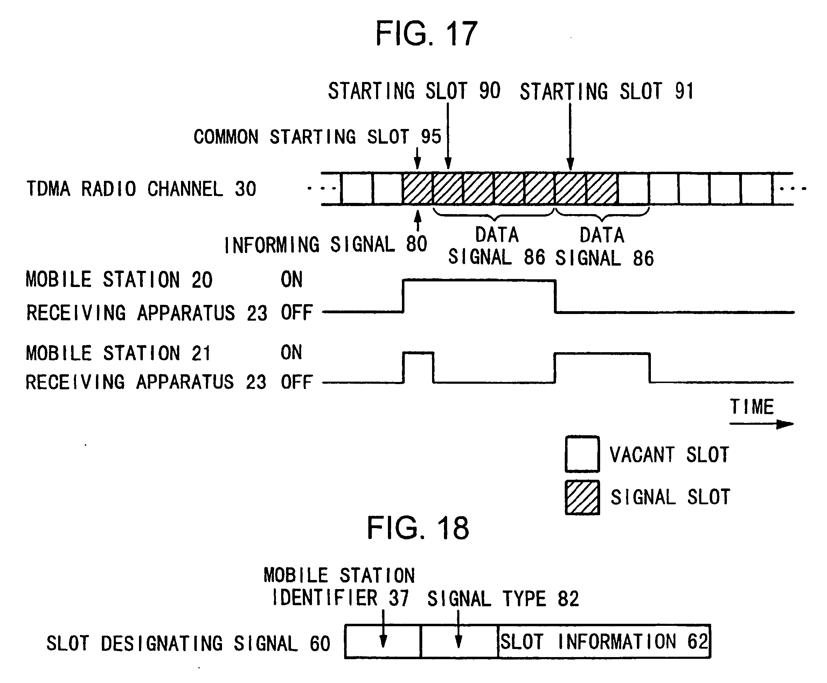

Next, an explanation will be made of the operation of base station 10 and mobile station 20 with reference to Fig. 17. First, base station 10 starts to transmit informing signal 80 with common starting slot 95. Meanwhile, mobile station 20 and mobile station 21 start to receive with common starting slot 95. If signal type 82 of the received signal indicates an informing signal, then mobile station 20 or 21 reads out starting slot information 85 which follows the individual mobile station identifier 84 for that station.

When data signal 86 for base station 20 and data signal 86 for mobile station 21 are generated, base station 10 generates mobile station identifier 34 indicating that mobile stations 20, 21 should carry out signal reception, individual mobile station identifier 84 and starting slot information 85 of mobile station 20, and informing signal 80 which consists of individual mobile station identifier 84 and starting slot information 85 for mobile station 21, and transmits these signals from common starting slot 95. Next, base station 10 transmits data signal 86 for mobile station 20 from starting slot 90 which is indicated by starting slot information 85 which follows the individual mobile station identifier 84 for mobile station 20. Furthermore, base station 10 transmits data signal 86 for mobile station 21 from starting slot 91 which is indicated by starting slot information 85 which follows the individual mobile station identifier 84 for mobile station 21. Data signal 86 is transmitted by one slot or a plurality of slots in the same manner as shown in Fig. 5.

Mobile station 20 begins receiving the signal from starting slot 90 which is indicated by starting slot information 85 which follows the individual mobile station identifier 84 for mobile station 20. If the received slot is one which is addressed to that station, then mobile station 20 continues signal reception. On the other hand, if the received slot is vacant, or is a signal slot addressed to another station, then mobile station 20 halts signal reception.

An explanation will now be made of how starting slot 90 may become a slot for another station. A starting slot is assigned to every mobile station, so that, in general, the reception of information is complete before the generation of a starting slot for another station occurs. However, when the interval between starting slots becomes narrow due to an increase in the number of mobile stations in an area, or the traffic for a specific mobile station increases notably, the slot of the specific mobile station is extended to the next starting slot which has been generated for another station.

In the example shown in Fig. 17, starting slot 90 is the next slot after common starting slot 95, so that mobile station 20 receives data signal 86 in succession after informing signal 80. After that, mobile station 20 stops the reception of the data signal. Furthermore, starting slot 91 is separated from common slot 95, so that mobile station 21 receives informing signal 80, and then terminates reception after that. Next, mobile station 21 starts to receive slots from starting slot 91 again. Further, mobile station 21 stops reception after receiving data signal 86.

In this second embodiment, the presence of a data signal is informed to one or more mobile stations by informing signal 80, so that it is possible to inform a mobile station of the presence or absence of a data signal more quickly as compared to the case
where signals are transmitted successively to one or more mobile stations. Furthermore, it is possible to improve the utilization efficiency of the TDMA radio channel.

### (VARIATIONS OF PRESENT INVENTION)

The preferred embodiments described herein are illustrative and not restrictive, the scope of the invention being defined by the appended claims.

For example, it is possible to realize various modifications as follows. i) Base station 10 may determine the arrangement of starting slots 90, 91 and common starting slot 95 by fixed algorithm. In this case, base station 10 may inform the arrangement of starting slots 90, 91 in the first embodiment and the arrangement of common starting slot 95 in the first and second embodiment, to mobile stations 20, 21 with slot designation signal 60.

Fig. 18 is a conceptual diagram showing slot designation signal 60. Slot designation signal 60 consists of mobile station identifier 37 for identifying mobile station 20, signal type 82 which indicates that it is slot designation signal 60, and slot information 62. Slot information 62 indicates the arrangement of starting slots 90, 91 in the first embodiment and the arrangement of common starting slot 95 in the first and second embodiment.

Base station 10, for example, determines the arrangement of starting slots 90, 91 and common starting slot 95 to increase the utilization efficiency of the radio channel by using parameters. For example, the parameters consist of the number of mobile stations, the permitted transmission delay, the amount of the individual signal for each mobile station, the amount of the common signal for a plurality of mobile stations, the occurrence characteristic of the signal, and so on.
ii) Slot designation signal 60 may be transmitted using a TDMA radio channel used for control which is different from a TDMA radio channel used for communication. In this case, mobile stations 20, 21 switch to a TDMA radio channel used for communication after they receive slot designation signal 60 with a TDMA radio channel for control. After that, mobile stations 20, 21 monitor designated starting slots 90, 91 and common starting slot 95. Therefore, it is possible to flexibly determine the arrangement of starting slots 90, 91 and common starting slot 95, according to conditions. In addition, mobile station 20 may determine starting slots 90, 91 and common starting slot 95, and may inform base station 10.

## Claims

1. A communication method for use between a base station (10) and at least one mobile station (20, 21) through a TDMA radio channel (30) which has a series of slots (40), said method comprising the steps of:
a) periodically defining at said base station (10) at least one starting slot (90; 90, 91; 95) in said series of slots;
b) when there is a data signal (32) which is addressed to a mobile station and can be transmitted through a single slot in said series of slots, said data signal (32) comprising a mobile station identifier (34) and data (36), generating at said base station (10) a head slot containing the mobile station identifier (34) which identifies said mobile station, the data (36), a continuation slot number (42) indicating 0, and a slot type (41) indicating that the data (36) is contained in the slot ;
c) when there is a data signal (32) which is addressed to a mobile station and multiple slots are necessary to transmit the data signal (32), said data signal (32) comprising a mobile station identifier (34) and data (36), generating at said base station (10) a head slot having a mobile station identifier (34) which identifies said mobile station, a head part of said data (36), a continuation slot number (42) indicating the number of continuation slots following to the head slot, and a slot type (41) indicating that data (36) is contained in the slot, and one or more continuation slots, each continuation slot containing a part or all of the remaining part of the data (36), a continuation slot number (42) indicating the number of slots following to the slot, and a slot type (41) indicating that data (36) is contained in the slot ;
d) when a head slot addressed to a mobile station is generated, transmitting the head slot from said base station to said mobile station through the starting slot;
e) when a head slot and one or more continuation slots addressed to a mobile station are generated, transmitting the generated slots from said base station to said mobile station through successive slots beginning with the starting slot;
f) when there is no head slot nor continuation slot to transmit, transmitting from said base station to said mobile station through the present slot in the series of slots a vacant slot containing a slot type (41) indicating that no data (36) is contained in the slot ;
g) selectively checking at said at least one mobile station (20, 21) said at least one starting slot (90; 90, 91; 95) to determine whether a head slot containing the mobile station identifier (34) of the mobile station is received and receiving the data (36) contained in said head slot, in the affirmative;
h) when the starting slot is the head slot, consecutively receiving, at said at least one mobile station, continuation slots subsequent to the head slot, a number of the received continuation slots determined by a continuation slot number (42) contained in the head slot; and
i) stopping, at said at least one mobile station, the checking of slots until a next starting slot (90; 90, 91; 95) when a slot type (41) is received through a starting slot indicating that no data (36) is contained in the slot.

2. A communication method according to claim 1,
wherein said at least one mobile station receives said data (36) when a slot type indicating that data is contained in the slot is received through a starting slot.

3. A communication method according to claim 2, wherein after having received said data (36), said at least one mobile station checks a slot immediately succeeding said one or more successive slots to receive any subsequent data addressed thereto.

4. A communication method according to claim 2, wherein an interval between two successive starting slots (90) is changed according to a volume of communication traffic and a permissible time delay in transmission of a data signal after said data signal is generated at said base station.

5. A communication method according to claim 2, wherein said at least one starting slot includes at least one common starting slot (95) for transmitting a data signal common to said at least two mobile stations.

6. A communication method according to claim 5, wherein in the beginning of communication with a mobile station, said base station transmits a synchronous word, using said at least one common starting slot, and said mobile station checks every slot to detect a position of said at least one common starting slot.

7. A communication method according to claim 5, wherein said at least one starting slot further includes at least one individual starting slot (90, 91) individually assigned to each mobile station, and each mobile station selectively checks at least one individual starting slot assigned to itself, as well as said at least one common starting slot (95) to determine whether there is any data signal addressed thereto.

8. A communication method according to claim 7, wherein said base station notifies each mobile station of a position of an individual starting slot assigned thereto, using said at least one common starting slot.

9. A communication method according to claim 2, wherein one individual starting slot is assigned to each mobile station, and each mobile station selectively checks the one individual starting slot assigned to itself to determine whether there is any data signal addressed thereto.

10. A communication method according to claim 2, wherein
said at least one mobile station can be individually switched between a first mode where it selectively checks said at least one starting slot and a second mode where it checks every slot, and
said base station transmits a data signal, using one or more successive slots beginning with said at least one starting slot if said data signal is addressed to a mobile station which operates under said first mode or using one or more successive slots in any position if said data signal is addressed to a mobile station which operates under said second mode.

11. A communication system including a base station (10) and at least one mobile station (20, 21) communicating through a TDMA radio channel (30) which has a series of slots (40), wherein:
said base station includes a control apparatus (12) and a transmission apparatus (11) for carrying out the procedural steps of said base station (10) in the method according to any of claims 1-10; and
said at least one mobile station (20, 21) includes a control apparatus (22) and a receiving apparatus (23) for carrying out the procedural steps of said at least one mobile station in the method according to any of claims 1-10.

## Patentansprüche

1. Kommunikationsverfahren zur Verwendung zwischen einer Basisstation (10) und zumindest einer Mobilstation (20, 21) durch einen TDMA-Funkkanal (30), welcher eine Reihe von Slots (40) hat, wobei das Verfahren die Schritte beinhaltet:
a) periodisches Definieren zumindest eines Startslots (90; 90, 91; 95) in der Reihe von Slots an der Basisstation (10);
b) wenn es ein Datensignal (32) gibt, welches an eine Mobilstation gerichtet ist und durch einen einzelnen Slot in der Reihe von Slots übertragen werden kann, wobei das Datensignal (32) einen Mobilstation-Identifikator (34) und Daten (36) beinhaltet, Erzeugen eines Kopfslots, der den Mobilstation-Identifikator (34) enthält, welcher die Mobilstation identifiziert, der Daten (36), einer Fortsetzungsslotanzahl (42), die 0 angibt, und eines Slottyps (41), der besagt, dass die Daten (36) in dem Slot enthalten sind, an der Basisstation (10);
c) wenn es ein Datensignal (32) gibt, welches an eine Mobilstation gerichtet ist, und mehrere Slots notwendig sind, um das Datensignal (32) zu übertragen, wobei das Datensignal (32) einen Mobilstation-Identifikator (34) und Daten (36) beinhaltet, Erzeugen eines Kopfslots mit einem Mobilstation-Identifikator (34), welcher die Mobilstation identifiziert, eines Kopfteils der Daten (36), einer Fortsetzungsslotanzahl (42), die die Anzahl von auf den Kopfslot folgenden Fortsetzungsslots angibt, und eines Slottyps (41), der besagt, dass Daten (36) in dem Slot enthalten sind, und eines oder mehrerer Fortsetzungsslots, wobei jeder Fortsetzungsslot einen Teil oder den gesamten verbleibenden Teil der Daten (36), eine Fortsetzungsslotanzahl (42), die die Anzahl von auf den Slot folgenden Slots angibt, und einen Slottyp (41), der besagt, dass Daten (36) in dem Slot enthalten sind, enthält, an der Basisstation (10);
d) wenn ein an eine Mobilstation gerichteter Kopfslot erzeugt ist, Übertragen des Kopfslots von der Basisstation zu der Mobilstation durch den Startslot;
e) wenn ein Kopfslot und ein oder mehrere Fortsetzungsslots, die an eine Mobilstation gerichtet sind, erzeugt sind, Übertragen der erzeugten Slots von der Basisstation zu der Mobilstation durch aufeinander folgende Slots beginnend mit dem Startslot;
f) wenn es weder einen Kopfslot noch einen Fortsetzungsslot gibt, die zu übertragen sind, Übertragen eines freien Slots, der einen Slottyp (41) enthält, der besagt, dass keine Daten (36) in dem Slot enthalten sind, von der Basisstation zu der Mobilstation durch den gegenwärtigen Slot in der Reihe von Slots;
g) selektives Prüfen des zumindest einen Startslots (90; 90, 91; 95) an der zumindest einen Mobilstation (20, 21), um zu ermitteln, ob ein den Mobilstation-Identifikator (34) der Mobilstation enthaltender Kopfslot empfangen wird, und im bejahenden Fall Empfangen der in dem Kopfslot enthaltenden Daten (36);
h) wenn der Startslot der Kopfslot ist, aufeinander folgend Empfangen von auf den Kopfslot folgenden Fortsetzungsslots, einer Anzahl der empfangenen Fortsetzungsslots, die durch eine in dem Kopfslot enthaltene Fortsetzungsslotanzahl (42) bestimmt wird, an der zumindest einen Mobilstation; und
i) Beenden des Prüfens von Slots bis zu einem nächsten Startslot (90; 90, 91; 95), wenn ein Slottyp (41) durch einen Startslot empfangen wird, der besagt, dass keine Daten (36) in dem Slot enthalten sind, an der zumindest einen Mobilstation.

2. Kommunikationsverfahren nach Anspruch 1, bei dem die zumindest eine Mobilstation die Daten (36) empfängt, wenn ein Slottyp, der besagt, dass Daten in dem Slot enthalten sind, durch einen Startslot empfangen wird.

3. Kommunikationsverfahren nach Anspruch 2, bei dem, nachdem sie die Daten (36) empfangen hat, die zumindest eine Mobilstation einen Slot prüft, der unmittelbar auf den einen oder die mehreren aufeinander folgenden Slots folgt, um irgend welche nachfolgenden, an sie gerichtete Daten zu empfangen.

4. Kommunikationsverfahren nach Anspruch 2, bei dem ein Intervall zwischen zwei aufeinander folgenden Startslots (90) in Übereinstimmung mit einem Kommunikationsverkehrsvolumen und einer zulässigen Zeitverzögerung bei der Übertragung eines Datensignals geändert wird, nachdem das Datensignal an der Basisstation erzeugt ist.

5. Kommunikationsverfahren nach Anspruch 2, bei dem der zumindest eine Startslot zumindest einen gemeinsamen Startslot (95) zum Übertragen eines den zumindest zwei Mobilstationen gemeinsamen Datensignals beinhaltet.

6. Kommunikationsverfahren nach Anspruch 5, bei dem zu Beginn der Kommunikation mit einer Mobilstation die Basisstation unter Verwendung des zumindest einen gemeinsamen Startslots ein synchrones Wort überträgt, und die Mobilstation jeden Slot prüft, um eine Position des zumindest einen gemeinsamen Startslots zu erfassen.

7. Kommunikationsverfahren nach Anspruch 5, bei dem der zumindest eine Startslot ferner zumindest einen jeder Mobilstation individuell zugeordneten individuellen Startslot (90, 91) beinhaltet, und jede Mobilstation selektiv zumindest einen ihr selbst zugeordneten individuellen Startslot sowie auch den zumindest einen gemeinsamen Startslot (95) prüft, um zu ermitteln, ob es irgend ein an sie gerichtetes Datensignal gibt.

8. Kommunikationsverfahren nach Anspruch 7, bei dem die Basisstation unter Verwendung des zumindest einen gemeinsamen Startslots jede Mobilstation über eine Position eines ihr zugeordneten individuellen Startslots unterrichtet.

9. Kommunikationsverfahren nach Anspruch 2, bei dem jeder Mobilstation ein individueller Startslot zugeordnet ist und jede Mobilstation selektiv den einen ihr selbst zugeordneten individuellen Startslot prüft, um zu ermitteln, ob es irgend ein an sie gerichtetes Datensignal gibt.

10. Kommunikationsverfahren nach Anspruch 2, bei dem
die zumindest eine Mobilstation individuell zwischen einer ersten Betriebsart, in der sie selektiv den zumindest einen Startslot prüft, und einer zweiten Betriebsart, in der sie jeden Slot prüft, umgeschaltet werden kann, und
die Basisstation ein Datensignal überträgt, unter Verwendung eines oder mehrerer aufeinander folgender Slots beginnend mit dem Startslot, falls das Datensignal an eine Mobilstation gerichtet ist, welche in der ersten Betriebsart arbeitet, oder unter Verwendung eines oder mehrerer aufeinander folgender Slots in einer beliebigen Position, falls das Datensignal an eine Mobilstation gerichtet ist, welche in der zweiten Betriebsart arbeitet.

11. Kommunikationssystem mit einer Basisstation (10) und zumindest einer Mobilstation (20, 21), die durch einen TDMA-Funkkanal (30) kommunizieren, welcher eine Reihe von Slots (40) hat, wobei:
die Basisstation eine Steuervorrichtung (12) und eine Übertragungsvorrichtung (11) zum Durchführen der Verfahrensschritte der Basisstation (10) in dem Verfahren nach einem der Ansprüche 1 bis 10 beinhaltet; und
die zumindest eine Mobilstation (20, 21) eine Steuervorrichtung (22) und eine Empfangsvorrichtung (23) zum Durchführen der Verfahrensschritte der zumindest einen Mobilstation in dem Verfahren nach einem der Ansprüche 1 bis 10 beinhaltet.

## Revendications

1. Procédé de communication destiné à être utilisé entre une station de base (10) et au moins une station mobile (20, 21) à travers un canal radio TDMA (30) qui a une série de tranches (40), ledit procédé comprenant les étapes consistant à :
a) définir périodiquement à ladite station de base (10) au moins une tranche de début (90 ; 90, 91 ; 95) dans ladite série de tranches ;
b) lorsqu'il y a un signal de données (32) qui est adressé à une station mobile et qui peut être transmis à travers une tranche unique dans ladite série de tranches, ledit signal de données (32) comprenant un identifiant de station mobile (34) et des données (36), générer à ladite station de base (10) une tranche de tête contenant l'identifiant de station mobile (34) qui identifie ladite station mobile, les données (36), un numéro de tranche de continuation (42) indiquant 0, et un type de tranche (41) indiquant que les données (36) sont contenues dans la tranche ;
c) lorsqu'il y a un signal de données (32) qui est adressé à une station mobile et de multiples tranches sont nécessaires pour transmettre le signal de données (32), ledit signal de données (32) comprenant un identifiant de station mobile (34) et des données (36), générer à ladite station de base (10) une tranche de tête ayant un identifiant de station mobile (34) qui identifie ladite station mobile, une partie de tête desdites données (36), un numéro de tranche de continuation (42) indiquant le nombre de tranches de continuation suivant la tranche de tête, et un type de tranche (41) indiquant que les données (36) sont contenues dans la tranche, et une ou plusieurs tranches de continuation, chaque tranche de continuation contenant une partie ou l'intégralité de la partie restante des données (36), un numéro de tranche de continuation (42) indiquant le nombre de tranches suivant la tranche, et un type de tranche (41) indiquant que les données (36) sont contenues dans la tranche ;
d) lorsqu'une tranche de tête adressée à une station mobile est générée, transmettre la tranche de tête de ladite station de base à ladite station mobile à travers la tranche de début ;
e) lorsqu'une tranche de tête et une ou plusieurs tranches de continuation adressées à une station mobile sont générées, transmettre les tranches générées de ladite station de base à ladite station mobile à travers des tranches successives à partir de la tranche de début ;
f) lorsqu'il n'y a pas de tranche de tête ni de tranche de continuation à transmettre, transmettre de ladite station de base à ladite station mobile à travers la présente tranche dans la série de tranches une tranche vacante contenant un type de tranche (41) indiquant qu'il n'y a pas de données (36) contenues dans la tranche ;
g) contrôler sélectivement à ladite au moins une station mobile (20, 21) ladite au moins une tranche de début (90 ; 90, 91 ; 95) pour déterminer si une tranche de tête contenant l'identifiant de station mobile (34) de la station mobile est reçue et, si tel est le cas, recevoir les données (36) contenues dans ladite tranche de tête ;
h) lorsque la tranche de début est la tranche de tête, recevoir consécutivement, à ladite au moins une station mobile, des tranches de continuation à la suite de la tranche de tête, le nombre des tranches de continuation reçues étant déterminé par un numéro de tranche de continuation (42) contenu dans la tranche de tête ; et
i) arrêter, à ladite au moins une station mobile, le contrôle des tranches jusqu'à la prochaine tranche de début (90 ; 90, 91 ; 95) lorsqu'un type de tranche (41) est reçu à travers une tranche de début indiquant qu'il n'y a pas de données (36) contenues dans la tranche.

2. Procédé de communication selon la revendication 1,
dans lequel ladite au moins une station mobile reçoit lesdites données (36) lorsqu'un type de tranche indiquant que des données sont contenues dans la tranche est reçu à travers une tranche de début.

3. Procédé de communication selon la revendication 2,
dans lequel après avoir reçu lesdites données (36), ladite au moins une station mobile contrôle une tranche immédiatement après lesdites une ou plusieurs tranches successives pour recevoir d'éventuelles données suivantes qui lui sont adressées.

4. Procédé de communication selon la revendication 2,
dans lequel un intervalle entre deux tranches de début successives (90) est changé en fonction d'un volume de trafic de communication et d'un délai admissible de transmission d'un signal de données après que ledit signal de données est généré à ladite station de base.

5. Procédé de communication selon la revendication 2,
dans lequel ladite au moins une tranche de début comprend au moins une tranche de début commune (95) pour transmettre un signal de données commun aux dites au moins deux stations mobiles.

6. Procédé de communication selon la revendication 5,
dans lequel au début d'une communication avec une station mobile, ladite station de base transmet un mot synchrone, en utilisant ladite au moins une tranche de début commune, et ladite station mobile contrôle chaque tranche pour détecter une position de ladite au moins une tranche de début commune.

7. Procédé de communication selon la revendication 5,
dans lequel ladite au moins une tranche de début comprend en outre au moins une tranche de début individuelle (90, 91) affectée individuellement à chaque station mobile, et chaque station mobile contrôle sélectivement au moins une tranche de début individuelle qui est affectée à elle-même ainsi qu'à ladite au moins une tranche de début commune (95) pour déterminer si un signal de données lui est adressé.

8. Procédé de communication selon la revendication 7,
dans lequel ladite station de base notifie à chaque station mobile une position d'une tranche de début individuelle qui lui est affectée, en utilisant ladite au moins une tranche de début commune.

9. Procédé de communication selon la revendication 2,
dans lequel une tranche de début individuelle est affectée à chaque station mobile, et chaque station mobile contrôle sélectivement la tranche de début individuelle qui lui est affectée pour déterminer si un signal de données lui est adressé.

10. Procédé de communication selon la revendication 2, dans lequel
ladite au moins une station mobile peut être individuellement commutée entre un premier mode dans lequel elle contrôle sélectivement ladite au moins une tranche de début et un deuxième mode dans lequel elle contrôle chaque tranche, et
ladite station de base transmet un signal de données, en utilisant une ou plusieurs tranches successives en commençant à ladite au moins une tranche de début si ledit signal de données est adressé à une station mobile qui fonctionne dans ledit premier mode ou en utilisant une ou plusieurs tranches successives à n'importe quelle position si ledit signal de données est adressé à une station mobile qui fonctionne dans ledit deuxième mode.

11. Système de communication comprenant une station de base (10) et au moins une station mobile (20, 21) communiquant à travers un canal radio TDMA (30) qui a une série de tranches (40), dans lequel :
ladite station de base comprend un appareil de commande (12) et un appareil de transmission (11) pour effectuer les étapes procédurales de ladite station de base (10) dans le procédé selon l'une quelconque des revendications 1 à 10 ; et
ladite au moins une station mobile (20, 21) comprend un appareil de commande (22) et un appareil de réception (23) pour effectuer les étapes procédurales de ladite au moins une station mobile dans le procédé selon l'une quelconque des revendications 1 à 10.
